# EUROPÄISCHE PATENTANMELDUNG

(11) **EP 3 771 696 A1**
(43) Veröffentlichungstag der Anmeldung: **03.02.2021**
(21) Anmeldenummer: 19189150.6
(22) Anmeldetag: 30.07.2019
(51) Int. Cl.: C03B 37/012, C03B 37/027

(54) **VERFAHREN UND ZWISCHENPRODUKT FÜR DIE HERSTELLUNG EINER HOHLKERNFASER SOWIE VERFAHREN ZUR HERSTELLUNG EINER VORFORM FÜR EINE HOHLKERNFASER**

(71) Anmelder: Heraeus Quarzglas GmbH & Co. KG, 63450 Hanau (DE)
(72) Erfinder: ROSENBERGER, Manuel, 63450 Hanau (DE); EHRENTRAUT, Enrico, 63450 Hanau (DE); SCHUSTER, Kay, 63450 Hanau (DE); HÜNERMANN, Michael, 63450 Hanau (DE)
(74) Vertreter: Staudt, Armin Walter

(57) **Zusammenfassung**

Es sind Verfahren zur Herstellung einer Antiresonanten Hohlkernfaser bekannt, die einen sich entlang einer Faser-Längsachse erstreckenden Hohlkern und einen den Hohlkern umgebenden inneren Mantelbereich aufweist, der mehrere Antiresonanzelemente umfasst. Die bekannten Verfahren umfassen die Verfahrensschritte: des Bereitstellens eines Hüllrohres, das eine Hüllrohr-Innenbohrung und eine Hüllrohr-Längsachse aufweist, entlang der sich eine von einer Innenseite und einer Außenseite begrenzte Hüllrohr-Wandung erstreckt; des Bereitstellens von rohrförmigen Antiresonanzelement-Vorformlingen; des Montierens der Antiresonanzelement-Vorformlinge an Soll-Positionen der Innenseite der Hüllrohr-Wandung unter Bildung einer primären Vorform, die einen hohlen Kernbereich und einen Mantelbereich aufweist; des Elongieren der primären Vorform zu der Hohlkernfaser oder der Weiterverarbeitung der primären Vorform zu einer sekundären Vorform. Um hiervon ausgehend eine hohe Präzision und eine exakte Positionierung der Antiresonanzelemente in einer ausreichend stabilen und reproduzierbaren Weise zu erreichen, wird vorgeschlagen, dass mindestens ein Teil der bereitgestellten Antiresonanzelement-Vorformlinge einen Fügeverbund aus mehreren, miteinander verschachtelten Strukturelementen bildet, der mindestens ein Antiresonanzelement-Außenrohr und mindestens eine mit der Innenmantelfläche des Antiresonanzelement-Außenrohres verbundene verschachtelte Innenkapillare umfasst, wobei mindestens das Antiresonanzelement-Außenrohr einen ovalen Querschnitt aufweist.

## Beschreibung

### Technischer Hintergrund

Die Erfindung betrifft ein Verfahren zur Herstellung einer Antiresonanten Hohlkernfaser, die einen sich entlang einer Faser-Längsachse erstreckenden Hohlkern und einen den Hohlkern umgebenden Mantelbereich, der mehrere Antiresonanzelemente umfasst, mit den Verfahrensschritten:
(a) Bereitstellen eines Hüllrohres, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bereitstellen von rohrförmigen Antiresonanzelement-Vorformlingen,
(c) Montieren der Antiresonanzelement-Vorformlinge an Soll-Positionen der Innenseite der Hüllrohr-Wandung unter Bildung einer primären Vorform, die einen hohlen Kernbereich und einen Mantelbereich aufweist,
(d) Elongieren der primären Vorform zu der Hohlkernfaser oder Weiterverarbeitung der primären Vorform zu einer sekundären Vorform, aus der die Hohlkernfaser gezogen wird, wobei die Weiterverarbeitung eine einmalige oder wiederholte Durchführung von einem oder mehreren der folgenden Heißformprozesse umfasst:
   (i) Elongieren,
   (ii) Kollabieren,
   (iii) Kollabieren und gleichzeitiges Elongieren,
   (iv) Aufkollabieren von zusätzlichem Mantelmaterial,
   (v) Aufkollabieren von zusätzlichem Mantelmaterial und anschließendes Elongieren,
   (vi) Aufkollabieren von zusätzlichem Mantelmaterial und gleichzeitiges Elongieren.

Außerdem betrifft die Erfindung ein Verfahren zur Herstellung einer Vorform für eine Antiresonante Hohlkernfaser, die einen sich entlang einer Faser-Längsachse erstreckenden Hohlkern und den Hohlkern umgebenden Mantelbereich aufweist, der mehrere Antiresonanzelemente umfasst, mit den Verfahrensschritten:
(a) Bereitstellen eines Hüllrohres, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bereitstellen von rohrförmigen Antiresonanzelement-Vorformlingen,
(c) Montieren der Antiresonanzelement-Vorformlinge an Soll-Positionen der Innenseite der Hüllrohr-Wandung unter Bildung einer primären Vorform, die einen hohlen Kernbereich und einen Mantelbereich aufweist, und
(d) optionale Weiterverarbeitung der primären Vorform zu einer sekundären Vorform, für die Hohlkernfaser, wobei die Weiterverarbeitung eine einmalige oder wiederholte Durchführung von einem oder mehreren der folgenden Heißformprozesse umfasst:
   (i) Elongieren,
   (ii) Kollabieren,
   (iii) Kollabieren und gleichzeitiges Elongieren,
   (iv) Aufkollabieren von zusätzlichem Mantelmaterial,
   (v) Aufkollabieren von zusätzlichem Mantelmaterial und anschließendes Elongieren,
   (vi) Aufkollabieren von zusätzlichem Mantelmaterial und gleichzeitiges Elongieren.

Darüber hinaus betrifft die Erfindung ein Zwischenprodukt für eine Antiresonante Hohlkernfaser, aufweisend ein Hüllrohr, das eine Hüllrohr-Innenbohrung und eine Hüllrohr-Längsachse aufweist, entlang der sich eine von einer Innenseite und einer Außenseite begrenzte Hüllrohr-Wandung erstreckt, und mehrere rohrförmige Antiresonanzelement-Vorformlinge, die an Soll-Positionen der Innenseite der Hüllrohr-Wandung montiert sind, und von denen mindestens ein Teil einen Fügeverbund aus mehreren, miteinander verschachtelten Strukturelementen bildet, der mindestens ein Antiresonanzelement-Außenrohr und mindestens eine mit der Innenmantelfläche des Antiresonanzelement-Außenrohres verbundene verschachtelte Innenkapillare umfasst.

Herkömmliche Monomode-Lichtleitfasern aus Vollmaterial haben einen Kernbereich aus Glas, der von einem Mantelbereich aus Glas mit niedrigerem Brechungsindex umgeben ist. Die Lichtleitung beruht dabei auf Totalreflexion zwischen Kern- und Mantelbereich. Die Wechselwirkungen des geführten Lichtes mit dem Vollmaterial sind jedoch mit einer erhöhten Latenz bei der Datenübertragung und relativ niedrigen Schädigungsschwellen gegenüber energiereicher Strahlung verbunden.

Diese Nachteile vermeiden oder verringern "Hohlkernfasern", bei denen der Kern einen evakuierten, mit Gas oder Flüssigkeit gefüllten Hohlraum umfasst. In Hohlkernfasern ist die Wechselwirkung des Lichtes mit dem Glas geringer als in Vollkernfasern. Der Brechungsindex des Kerns ist kleiner als der des Mantels, so dass eine Lichtleitung durch Totalreflexion nicht möglich ist und das Licht normalerweise aus dem Kern in den Mantel entweichen würde. In Abhängigkeit vom physikalischen Mechanismus der Lichtleitung werden Hohlkernfasern unterteilt in "photonische Bandlückenfasern" und "Antiresonanz-Reflexionsfaser".

Bei "photonischen Bandlückenfasern" ist der hohle Kernbereich von einem Mantel umgeben, in dem kleine Hohlkanäle periodisch angeordnet sind. Die periodische Struktur der Hohlkanäle im Mantel bewirkt den in Anlehnung an die Halbleitertechnologie als "photonische Bandlücke" bezeichneten Effekt, wonach an den Mantelstrukturen gestreutes Licht bestimmter Wellenlängenbereiche aufgrund von Braggreflexion im zentralen Hohlraum konstruktiv interferiert und sich nicht transversal im Mantel ausbreiten kann.

Bei der als "Antiresonante Hohlkernfaser" ("antiresonant hollow-core fibers"; AR-HCF) bezeichneten Ausführungsform der Hohlkernfaser ist der hohle Kernbereich von einem inneren Mantelbereich umgeben, in dem sogenannte "antiresonante Elemente" (oder "Antiresonanzelemente"; kurz: "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den Faserkern leiten.

Diese Fasertechnologie verspricht eine niedrige optische Dämpfung, ein sehr breites Transmissionsspektrum (auch im UV- oder IR-Wellenlängenbereich) und eine geringe Latenz bei der Datenübertragung.

Potentielle Anwendungen der Hohlkernfasern liegen auf dem Gebiet der Datenübertragung, der Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich.

### Stand der Technik

Ein Nachteil Antiresonanter Hohlkernfasern liegt darin, dass Moden höherer Ordnung nicht zwangsläufig unterdrückt werden, so dass sie über große Übertragungslängen häufig nicht rein einmodig sind und sich die Qualität des Ausgangsstrahls verschlechtert.

Im Paper von Francesco Poletti "Nested antiresonant nodeless hollow core fiber"; Optics Express, Vol. 22, No. 20 (2014); DOI: 10.1364/OE 22.023807, wird ein Faserdesign vorgeschlagen, bei dem Antiresonanzelemente nicht als einfaches singuläres Strukturelement ausgebildet sind, sondern sich aus mehreren, miteinander verschachtelten (englisch: nested) Strukturelementen zusammensetzen. Die verschachtelten Antiresonanzelemente sind so ausgelegt, dass Kernmoden höherer Ordnung phasenangepasst an die Mantelmoden sind und unterdrückt werden, aber nicht die fundamentale Kernmode. Dadurch ist die Ausbreitung der fundamentalen Kernmode stets gewährleistet und die Hohlkernfaser kann über einen begrenzten Wellenlängenbereich effektiv einmodig gemacht werden.

Die effektive Modenunterdrückung hängt von der Mittenwellenlänge des übertragenen Lichts und von Strukturparametern des Faserdesigns ab, wie dem Radius des Hohlkerns und der Durchmesserdifferenz von verschachtelten Ringstrukturen in den Antiresonanzelementen.

Aus der EP 3 136 143 A1 ist eine Antiresonante Hohlkernfaser bekannt (dort bezeichnet als "Hohlkernfaser ohne Bandlücke"), bei der der Kern neben der Fundamentalmode noch weitere Moden leiten kann. Zu diesem Zweck ist er von einem inneren Mantel mit "nicht-resonanten Elementen" umgeben, die eine Phasenanpassung von antiresonanten Moden mit den höheren Moden liefern. Die Herstellung der Hohlkernfaser erfolgt nach einer sogenannten "stack-and-draw-Technik", indem die Ausgangselemente zu einem achsenparallelen Ensemble angeordnet und zu einer Vorform fixiert werden und die Vorform anschließend elongiert wird. Hierbei wird ein Hüllrohr mit hexagonalem Innenquerschnitt verwendet und in den Innenkanten des Hüllrohres werden sechs sogenannte "ARE-Vorformen" (Anti-Resonanz-Element-Vorformen) fixiert. Diese Vorform wird in zwei Stufen zu einer Hohlkernfaser ausgezogen.

Aus der WO 2018/169487 A1 ist ein Verfahren zur Herstellung einer Vorform für antiresonante Hohlkernfasern bekannt, bei dem ein erster Mantelbereich eine Vielzahl an Stäben und ein zweiter Mantelbereich eine Vielzahl von Rohren umfasst, die von einem äußeren Hüllrohr umgeben sind. Stäbe, Rohre und Hüllrohr werden mittels "Stack and draw"-Technik zur Bildung einer Vorform zusammengefügt. Vor dem Elongieren der Vorform wird das Vorformende versiegelt, was durch Aufbringen einer Siegelmasse geschieht. Als Siegelmasse wird beispielsweise ein UV-Kleber eingesetzt.

### Technische Aufgabenstellung

Antiresonante Hohlkernfasern und insbesondere solche mit verschachtelten Strukturelementen haben komplexe Innengeometrien, was ihre exakte und reproduzierbare Herstellung erschwert. Dies gilt umso mehr, da zur Einhaltung der Resonanzbeziehungsweise Antiresonanzbedingungen bereits geringe Maßabweichungen in der Größenordnung der Arbeitswellenlänge des zu führenden Lichts nicht tolerierbar sind. Abweichungen von der Soll-Geometrie können ihre Ursache bei der Konfiguration der Faser-Vorform haben, und sie können auch durch ungewollte nichtmaßstäbliche Verformungen beim Faserziehprozess auftreten.

Bei der bekannten "Stack-and-Draw"-Technik sind viele Elemente positionsgenau zusammenzufügen. Beispielsweise müssen zur Herstellung der aus dem eingangs genannten Paper bekannten Hohlkernfaser im "NANF"-Design sechs Antiresonanzelement-Vorformlinge, jeweils bestehend aus einem Antiresonanzelement-Außenrohr und einseitig an der Antiresonanzelement-Außenrohr-Innenmantelfläche eingeschweißter Innenkapillare, an der Innenseite eines Hüllrohrs angebracht werden.

Zur Realisierung geringer Dämpfungswerte und breiter Transmissionsbereiche ist neben einer gleichmäßigen Wandstärke der Wandungen der Antiresonanzelemente auch die azimutale Position der Antiresonanzelemente innerhalb des Hüllrohres wichtig. Dies ist mit der "Stack-and-Draw"-Technik nicht ohne Weiteres zu realisieren. Ziel der Erfindung ist, ein Verfahren zur kostengünstigen Herstellung einer Antiresonanten Hohlkernfaser anzugeben, das Beschränkungen herkömmlicher Herstellungsverfahren vermeidet.

Insbesondere ist es Ziel der Erfindung, ein Verfahren zur Herstellung einer Antiresonanten Hohlkernfaser und einer Vorform für Antiresonante Hohlkernfasern sowie ein Zwischenprodukt dafür bereitzustellen, mit dem reproduzierbar eine hohe Präzision der Strukturelemente und eine exakte Positionierung der Antiresonanzelemente in der Faser in einer ausreichend stabilen und reproduzierbaren Weise erreicht werden kann.

Außerdem sollen Nachteile der klassischen "Stack and Draw"-Technik, mit der die erforderlichen Strukturgenauigkeiten, insbesondere eine gleichmäßige Wandstärke der Antiresonanzelemente und eine exakte Positionierung an vorgegebenen azimutalen Positionen nicht einfach zu erreichen ist, möglichst vermieden werden.

### Zusammenfassung der Erfindung

Hinsichtlich des Verfahrens zur Herstellung der Antiresonanten Hohlkernfaser wird diese Aufgabe ausgehend von einem Verfahren der eingangs genannten Gattung erfindungsgemäß dadurch gelöst, dass mindestens ein Teil der gemäß Verfahrensschritt (b) bereitgestellten Antiresonanzelement-Vorformlinge einen Fügeverbund aus mehreren, miteinander verschachtelten Strukturelementen bildet, der mindestens ein Antiresonanzelement-Außenrohr und mindestens eine mit der Innenmantelfläche des Antiresonanzelement-Außenrohres verbundene verschachtelte Innenkapillare umfasst, wobei mindestens das Antiresonanzelement-Außenrohr einen ovalen Querschnitt aufweist.

Ausgangspunkt für die Herstellung der Antiresonanten Hohlkernfaser ist eine Vorform, die hier auch als "primäre Vorform" bezeichnet wird. Die Herstellung der primären Vorform umfasst üblicherweise den Einbau und das Verbinden von Antiresonanzelement-Vorformlingen mit einem Hüllrohr unter Bildung eines sogenannten "Canes". Die primäre Vorform kann zu der Hohlkernfaser elongiert werden; in der Regel wird der primären Vorform aber zusätzliches Mantelmaterial hinzugefügt, um daraus eine hier als "sekundäre Vorform" bezeichnete Vorform zu erzeugen. Gegebenenfalls wird die Hohlkernfaser durch Elongieren der sekundären Vorform erzeugt. Alternativ werden die primäre Vorform oder die sekundäre Vorform unter Ausbildung eines koaxialen Ensembles von Bauteilen mit einem Überfangzylinder oder mit mehrere Überfangzylindern umgeben und das koaxiale Ensemble direkt zu der Hohlkernfaser elongiert. Der allgemeine Begriff "Vorform" wird hier zur Bezeichnung desjenigen Bauteils oder desjenigen koaxialen Ensembles von Bauteilen verstanden, aus der die Hohlkernfaser letztlich gezogen wird.

Das Hinzufügen von Mantelmaterial erfolgt beispielsweise durch Aufkollabieren eines Überfangzylinders auf die primäre Vorform. Die koaxiale Anordnung aus primärer Vorform und Überfangzylinder wird beim Aufkollabieren des Überfangzylinders elongiert, oder sie wird nicht elongiert. Dabei werden die Antiresonanzelement-Vorformlinge in ihrer Form oder Anordnung verändert, oder sie werden in ihrer Form oder Anordnung nicht verändert.

Die Herstellung der sekundären Vorform umfasst eine Anzahl von Verfahrensschritten, bei denen Ausgangselemente der Hohlkernfaser hergestellt und zueinander positioniert werden und mindestens einen Heißverformungsschritt. Jedes der Ausgangselemente und weist eine gewisse Abweichung von seiner Sollgeometrie auf und jeder Schritt der Positionierung und Umformung führt zwangsläufig zu Geometrieabweichungen, die sich in der fertigen Vorform zu einem absoluten Geometriefehler aufsummieren. Infolge einer Verjüngung der Ausgangselemente in einem Heißverformungsschritt kann es leicht zu ungewollten oder vorzeitigen Kontakten dicht nebeneinander liegender Ausgangselemente kommen, was zu nicht reproduzierbaren Verformungen und Endergebnissen führen kann. Dies stellt hohe Anforderungen an die Genauigkeit beim Positionieren und Fixieren der Ausgangselemente an ihren jeweilen Soll-Positionen insbesondere bei kompakten Anordnungen und kurzen Abständen der Ausgangselemente zueinander.

Das erfindungsgemäße Verfahren zielt darauf ab, diese Problematik zu mindern und die hohen Anforderungen an die Genauigkeit beim Positionieren und Fixieren der Ausgangselemente zu entschärfen.

Zu diesem Zweck werden Antiresonanzelement-Vorformlinge bereitgestellt, die einen Fügeverbund aus einem Antiresonanzelement-Außenrohr und mindestens einer verschachtelten Innenkapillare aufweisen, wobei das Antiresonanzelement-Außenrohr einen ovalen Querschnitt hat. Die ovale Querschnittsform ist durch eine im Querschnitt längste Achse (A_{L}) und eine im Querschnitt kürzeste Achse (A_{K}) definiert. Das ovale Antiresonanzelement-Außenrohr kann an seiner Soll-Position an der Hüllrohr-Innenwandung derart orientiert sein, dass sich die kurze Achse A_{K} in diejenige Raumrichtung erstreckt, die in Bezug auf Platzbedarf oder Einhaltung eines Mindestabstands zum benachbarten Strukturelement am kritischsten ist. In der Regel ist dies die Umfangsrichtung.

Daher ist bei einer bevorzugten Verfahrensvariante vorgesehen, dass der Antiresonanzelement-Vorformling an der Soll-Position so montiert wird, dass die längste Querschnittsachse A_{L} von der Hüllrohr-Längsachse aus gesehen in radialer Richtung verläuft. Die kurze Achse A_{K} erstreckt sich dann in tangentialer Richtung zur Innenmantelfläche des Hüllrohres. Durch diese Art der Orientierung ergibt sich ein größerer Abstand zwischen benachbarten Antiresonanzelement-Vorformlingen beim Montieren an der Hüllrohr-Innenmantelfläche, was die Anforderungen an die Einhaltung des Mindestabstandes verringert.

Der anfängliche Ovalitätsgrad des Antiresonanzelement-Außenrohres kann im Verlauf der weiteren Verarbeitung durch Verformungen infolge durch Druck- und Temperaturverhältnissen bei Heißverformungsprozessen verändert werden. Insbesondere kann der anfängliche Grad der Ovalität so eingestellt sein, dass sich in der endgültigen Hohlkernfaser eine kreisrunde Querschnittsform ergibt. Denn insbesondere im abschließenden Faserziehprozess findet eine geometrische Veränderung statt, infolge der Hohlräume mit ovalem radialem Querschnitt leicht zu Hohlräumen mit kreisrundem Querschnitt umgeformt werden. Durch ein geeignetes Vorhaltemaß an anfänglicher Ovalität im Antiresonanzelement-Vorformling kann aber auch eine Hohlkernfasern erzeugt werden, in der aus dem Antiresonanzelement-Vorformling ein Antiresonanzelement mit einer nicht-runden, ovalen Querschnittsform resultiert.

Ein günstiges Vorhaltemaß zeigt sich darin, dass das Achsenlängenverhältnis A_{L}/A_{K} der längsten Querschnittsachse A_{L} und der kürzesten Querschnittsachse A_{K} im Bereich zwischen 1,01 und 1,27 liegt, und vorzugsweise mindestens 1,10 beträgt. Dieses Achsenverhältnis wird hier auch als "Ovalität" oder "Ovalitätsgrad" bezeichnet.

Es hat sich bewährt, wenn der Fügeverbund mittels eines Fügeverfahrens erzeugt wird, das einen Verfahrensschritt umfasst, bei dem ein Ensemble aus Antiresonanzelement-Außenrohr und der mindestens einen verschachtelten Innenkapillare zonenweise erweicht und dabei gestreckt wird, wobei die verschachtelte Innenkapillare an der Innenmantelfläche des Antiresonanzelement-Außenrohres anliegt und sich parallel zu dessen Längsachse erstreckt.

Vor dem Erweichen und Strecken haben das Ausgangs-Antiresonanzelement-Außenrohr und die Ausgangs-Innenkapillare im einfachsten und bevorzugten Fall jeweils einen kreisrunden Querschnitt. Beim Erweichen und Strecken wird die Innenkapillare an der Innenmantelfläche des Antiresonanzelement-Außenrohr angeschmolzen. Infolge des Kontakts zwischen Innenkapillare und Antiresonanzelement-Außenrohr wirken dabei an der Innenmantelfläche des Antiresonanzelement-Außenrohres Kräfte, die zu einer Verformung des Querschnitts zu einer ovalen Querschnittsform, im Idealfall zu einer elliptischen Querschnittsform, führen. Die Scheitelpunkte der dabei resultierenden ovalen Querschnittsfläche (Ellipse) liegen beim Antiresonanzelement-Außenrohr auf einer Verbindungsgeraden, die durch den Kontaktpunkt zwischen Innenkapillare und Antiresonanzelement-Außenrohr verläuft.

Das Erweichen und Strecken bewirkt eine Verformung des Querschnitts des Antiresonanzelement-Außenrohres zu einem Oval. Dabei verformen sich auch in der Innenbohrung des Ausgangs-Antiresonanzelement-Außenrohres angeordnete Strukturelemente. Dabei hängen der Grad der Verformung und gegebenenfalls die Lage der Scheitelpunkte unter anderem vom so genannten rohrspezifischen "Glas-Luft-Verhältnis" und davon ab, ob sich innerhalb der Innenbohrung der verschachtelten Innenkapillare noch ein weiteres Strukturelement oder mehrere weitere Strukturelemente befinden.

Im Hinblick darauf hat es sich als vorteilhaft erwiesen, wenn das Antiresonanzelement-Außenrohr ein Glas-Luft-Verhältnis V_{Rohr} und die mindestens eine verschachtelte Innenkapillare ein Glas-Luft-Verhältnis V_{Kapillare} aufweist, wobei gilt: V_{Kapillare} > 2xV_{Rohr}, vorzugsweise V_{Kapillare} > 2,5xV_{Rohr}.

Das Glas-Luft-Verhältnis bezeichnet hier das Verhältnis der Querschnittsflächen der jeweiligen Rohrwandung und der Innenbohrung. Je größer der Unterschied der Glas-Luft-Verhältnisse V_{Rohr} und V_{Kapillare} ist, umso geringer ist - bei gleicher Ovalität des Antiresonanzelement-Außenrohres - der Grad der Verformung der verschachtelten Innenkapillare beziehungsweise der verschachtelten Innenkapillaren.

Die Ovalität der verschachtelten Innenkapillare beziehungsweise der verschachtelten Innenkapillaren ist dabei vorzugsweise geringer als die des Antiresonanzelement-Außenrohres und sie ist definiert durch eine Außenquerschnittsform mit dem Achsenlängenverhältnis A_{L}/A_{K} von maximal 1,10 und bevorzugt kleiner als 1,05. Dabei können sich auch die räumlichen Orientierungen der ovalen Querschnittsflächen von Antiresonanzelement-Außenrohr und verschachtelte Innenkapillare unterscheiden. Beim Antiresonanzelement-Außenrohr verläuft die lange Querschnittsachse A_{L} radial zur Innenmantelfläche des ehemaligen Hüllrohres, bei der verschachtelten Innenkapillare kann die lange Querschnittsachse A_{L} auch senkrecht dazu, also tangential zur Innenmantelfläche des ehemaligen Hüllrohres verlaufen.

Zur Fixierung von Ausgangs-Antiresonanzelement-Außenrohr und der mindestens einen Ausgangs-Innenkapillare werden diese Bauteile vor dem zonenweisen Erweichen und Strecken miteinander verbunden. Die Verbindung erfolgt vorzugsweise an zwei sich gegenüberliegenden stirnseitigen Enden des Ensembles, und sie erfolgt beispielsweise durch lokales, punktuelles Verkleben oder Verschmelzen.

Bei einer besonders geeigneten Variante des Verfahrens weist der Fügeverbund das Antiresonanzelement-Außenrohr mit ovalem Querschnitt und eine äußere verschachtelte Innenkapillare und mindestens eine innere verschachtelte Innenkapillare auf, wobei die innere verschachtelte Innenkapillare an einer Innenmantelfläche der äußeren verschachtelten Innenkapillare anliegt und sich parallel zu deren Längsachse erstreckt.

Die Positionierung und Justierung derartig mehrfach verschachtelter Antiresonanzelement-Vorformlinge gestaltet sich besonders einfach, wenn diese als Fügeverbund mit einem im Querschnitt ovalen Antiresonanzelement-Außenrohr eingesetzt werden.

Die Herstellung des Fügeverbundes umfasst vorzugsweise einen Verfahrensschritt, bei dem ein rohrförmiges Ensemble aus Ausgangs-Antiresonanzelement-Außenrohr, äußerer verschachtelter Ausgangs-Innenkapillare und innerer verschachtelter Ausgangs-Innenkapillare erweicht und dabei gestreckt wird. Alle genannten rohrförmigen Bauteile haben dabei anfänglich kreisrunden Innen- und Außenquerschnitt. Das Erweichen und Strecken bewirkt ein Verschmelzen der rohrförmigen Bauteile untereinander und eine Verformung des Querschnitts des Antiresonanzelement-Außenrohres zu einem Oval. Dabei können sich auch die Strukturelemente in der Innenbohrung des Ausgangs-Antiresonanzelement-Außenrohres verformen.

Der Fügeverbund mit Antiresonanzelement-Außenrohr mit ovalem Außenquerschnitt dient als Antiresonanzelement-Vorformling zur Herstellung einer Hohlkernfaser. Bei seiner Weiterverarbeitung zu einer Vorform werden derartige Antiresonanzelement-Vorformlinge an der Innenmantelfläche eines Hüllrohres montiert. Beim Elongieren der primären oder sekundären Vorform gemäß Verfahrensschritt (d) zu einer Hohlkernfaser wird vorzugsweise in dem elongierten Antiresonanzelement-Außenrohr ein Überdruck gegenüber dem elongierten hohlen Kernbereich erzeugt und aufrechterhalten, so dass eine Hohlkernfaser mit dem hohlen Kernbereich und dem inneren Mantelbereich erzeugt wird, in dem das vormalige Antiresonanzelement-Außenrohr ein Antiresonanzelement mit kreisrundem oder mit ovalem Querschnitt bildet. Der Grad der Ovalität des Antiresonanzelement-Außenrohres dient als Vorhaltemaß zum Erreichen der Rundheit beziehungsweise Ovalität des daraus in der Hohlkernfasern erzeugten Antiresonanzelements.

Es hat sich auch als vorteilhaft erwiesen, wenn bei der Weiterverarbeitung der primären Vorform zu der sekundären Vorform gemäß Verfahrensschritt (d) in dem elongierten Antiresonanzelement-Außenrohr der gleiche Druck wie in dem elongierten hohlen Kernbereich erzeugt und aufrechterhalten wird, so dass eine sekundäre Vorform erzeugt wird, in der das vormalige Antiresonanzelement-Außenrohr eine Antiresonanzelement-Vorstufe mit ovalem Querschnitt bildet.

Der Grad der Ovalität des Antiresonanzelement-Außenrohres dient hier als Vorhaltemaß zum Erreichen der Ovalität des daraus in der sekundären Vorform erhaltenen Antiresonanzelement-Vorstufe. Die Ovalität der Querschnittsfläche der Antiresonanzelement-Vorstufe in der sekundären Vorform ist durch das Achsenverhältnis der langen Querschnittsachse A_{L} und der kurzen Querschnittsachse A_{K} definiert. Die räumliche Orientierung des Ovals ist dadurch bestimmt, ob die lange Querschnittsachse A_{L} tangential oder radial zur Innenmantelfläche des ehemaligen Hüllrohres verläuft.

Der Grad der Ovalität der Antiresonanzelement-Vorstufe in der sekundären Vorform dient als Vorhaltemaß zum Erreichen der Ovalität, vorzugsweise der Rundheit, des daraus in der Hohlkernfaser erhaltenen Antiresonanzelements.

Die primäre Vorform hat vorzugsweise einen Außendurchmesser im Bereich von 20 bis 70 mm.

Beim Elongieren der primären Vorform zu der Hohlkernfasern oder zu einer sekundären Vorform wird zusätzliches Mantelmaterial aufgebracht, oder es wird kein zusätzliches Mantelmaterial aufgebracht. Beim Elongieren wird die primäre Vorform in einer Heizzone zonenweise erhitzt. Je größer der Durchmesser ist, umso langsamer ist die Nachführgeschwindigkeit in die Heizzone und umso länger ist die Dauer, der jedes axiale Teilstück der Vorform der hohen Temperatur der Heizzone ausgesetzt ist. Bei zu langsamer Nachführgeschwindigkeit beim Elongieren deformieren jedoch die Strukturelemente der Antiresonanzelement-Vorformlinge. Daher liegt der Durchmesser der primären Vorform vorzugsweise bei maximal 70 mm. Und der Durchmesser der primären Vorform beträgt vorzugsweise mindestens 20 mm. Denn es hat sich gezeigt, bei kleineren Durchmessern die thermische Trägheit der Vorform zu gering ist, um etwaige Temperaturschwankungen in der Heizzone auszugleichen.

Die Temperatur der Heizzone beim Heißformprozess sollte möglichst konstant sein. Vorteilhafterweise wird daher beim Heißformprozess gemäß Verfahrensschritt (d) ein temperaturgeregeltes Heizelement eingesetzt, dessen Soll-Temperatur auf +/- 0.1°C genau gehalten wird. Dadurch können Temperaturschwankungen im Heißformprozess auf weniger als +/- 0.5°C begrenzt werden.

Zur Verminderung absoluter Geometriefehler ist ein großes Ausziehverhältnis beim Elongieren erwünscht. Andererseits geht ein großes Ausziehverhältnis mit entsprechend großen Umformprozesse und Materialbewegungen einher, was leicht zu unerwünschten Deformationen bei den filigranen Strukturelementen der Antiresonanzelement-Vorformlinge führen kann. Als geeigneter Kompromiss hat sich erwiesen, wenn das Ausziehverhältnis beim Elongieren auf einen Wert im Bereich von 1,05 bis 10, vorzugsweise auf einen Wert im Bereich von 1,05 bis 5 eingestellt wird.

Bei einer bevorzugten Verfahrensvariante umfasst das Anordnen der Antiresonanzelement-Vorformlinge und/oder das Elongieren der primären Vorform, und/oder das Ziehen der Hohlkernfaser eine Fixierungs-Maßnahme und/oder eine Versiegelungsmaßnahme unter Einsatz einer amorphe SiO₂-Partikel enthaltenden Versiegelungs- oder Verbindungsmasse.

Die zum Versiegeln oder Fixieren eingesetzte Versiegelungs- oder Verbindungsmasse enthält amorphe SiO₂-Partikel, die beispielsweise in einer Dispersionsflüssigkeit aufgenommen sind. Diese Masse wird zwischen den zu verbindenden beziehungsweise zu versiegelnden Flächen aufgetragen und ist beim Einsatz in der Regel pastös. Beim Trocknen bei niedriger Temperatur wird die Dispersionsflüssigkeit teilweise oder vollständig entfernt und die Masse verfestigt. Die Versiegelungs- oder Verbindungsmasse und insbesondere die nach dem Trocknen erhaltene, verfestigte SiO₂-haltige Versiegelungs- oder Verbindungsmasse genügt den Anforderungen zur Fixierung und Verdichtung. Die zum Trocknen erforderliche Temperatur liegt unterhalb von 300 °C, was die Einhaltung der Maßhaltigkeit der Vorform begünstigt und thermische Beeinträchtigungen vermeidet. Ein Erhitzen auf höhere Temperaturen um 800 °C, beispielsweise beim Elongieren der Vorform zur Hohlkernfaser, führt zu einer weiteren thermischen Verfestigung der Versiegelungs- oder Verbindungsmasse, die auch geeignet ist, opakes oder transparentes Glas zu bilden. Dies geschieht durch Sintern oder Verglasen, wobei das Sintern zu opakem Glas vergleichsweise niedrigere Temperaturen und/oder kurze Erhitzungsdauern erfordert als ein Verglasen bis zur vollständigen Transparenz. Die Versiegelungs- oder Verbindungsmasse kann somit durch Erwärmen vollständig verdichtet und durch Erhitzen beim Heißformprozess verglast werden.

Beim Heißformprozess zersetzt sich die Versiegelungs- oder Verbindungsmasse nicht und sie setzt wenig an Verunreinigungen frei. Sie zeichnet sich somit durch thermische Stabilität und Reinheit beim Heißformprozess aus und sie vermeidet Verformungen infolge unterschiedlicher thermischer Ausdehnungskoeffizienten.

Die Versiegelungs- und Verbindungsmasse ist auch vorteilhaft einsetzbar, um beim Elongieren der primären Vorform und/oder beim Ziehen der Hohlkernfaser offene Enden der Antiresonanzelement-Vorformlinge und/oder einzelne Strukturelemente der Antiresonanzelement-Vorformlinge und/oder ein etwaigen Ringspalt zwischen Rohrelementen zu verschleißen.

Auf diese Weise können die einzelnen Bestandteile der primären Vorform und/oder sekundären Vorform beim Elongieren beziehungsweise beim Faserziehprozess unterschiedlichen Innendrücken ausgesetzt werden.

Die Exaktheit der Positionierung der Vorformlinge an der Innenmantelfläche des Hüllrohrs wird weiter verbessert, indem die Hüllrohr-Innenseite und/oder die Hüllrohr-Außenseite und/oder die Antiresonanzelement-Außenrohre-Innenseite und/oder die Antiresonanzelement-Außenrohr-Außenseite durch spanende Bearbeitung erzeugt wird, insbesondere durch Bohren, Fräsen, Schleifen, Honen und/oder Polieren

Diese Bearbeitungstechniken liefern im Vergleich zu anderen bekannten Umformtechniken unter Einsatz von Hitze und Druck genauere und filigranere Strukturen und sie vermeiden Verunreinigungen der Oberflächen durch Formwerkzeuge, wie beispielsweise Düsen, Pressen oder Schmelzformen.

Es hat sich außerdem eine Verfahrensweise bewährt, bei der das Antiresonanzelement-Außenrohres aus Quarzglas besteht, das mindestens einen Dotierstoff enthält, der die Viskosität von Quarzglas absenkt und/oder dass die mindestens eine verschachtelte Innenkapillare aus Quarzglas besteht, das mindestens einen Dotierstoff enthält, der die Viskosität von Quarzglas erhöht.

Als die Viskosität von Quarzglas absenkende Dotierstoffe kommen vorzugsweise Fluor, Chlor und/oder Hydroxylgruppen zum Einsatz. Als die Viskosität von Quarzglas erhöhende Dotierstoffe gelten Al₂O₃ (bis zu einer Konzentration von 15 Gew.-ppm) und Stickstoff.

Die Dotierung ermöglicht die Anpassung der thermischen Ausdehnungskoeffizienten von benachbarten Vorform-Bestandteilen, um Spannungen zu vermeiden oder zu vermindern. Sie kann auch dazu eingesetzt werden, die thermische Stabilität des Antiresonanzelement-Außenrohres gegenüber derjenigen der mindestens einen verschachtelten Innenkapillare zu verringern, um die Einstellung eines hohen Ovalitätsgrades beim Antiresonanzelement-Außenrohr zu erreichen.

In dieser Hinsicht ist es beispielsweise vorteilhaft, wenn das Quarzglas des Antiresonanzelement-Außenrohres bei einer Messtemperatur von 1250 °C eine um mindestens 0,1 dPa·s geringere Viskosität, vorzugsweise eine um mindestens 0,2 dPa·s, geringere Viskosität, aufweist als das Quarzglas der verschachtelten Innenkapillare (bei Angabe der Viskosität als logarithmischer Wert in dPa·s).

Hinsichtlich der Herstellung der Vorform für die Hohlkernfaser wird die oben angegebene technische Aufgabe ausgehend von einem Verfahren der eingangs genannten Gattung erfindungsgemäß dadurch gelöst, dass mindestens ein Teil der gemäß Verfahrensschritt (b) bereitgestellten Antiresonanzelement-Vorformlinge einen Fügeverbund aus mehreren, miteinander verschachtelten Strukturelementen bildet, der mindestens ein Antiresonanzelement-Außenrohr und mindestens eine mit der Innenmantelfläche des Antiresonanzelement-Außenrohres verbundene verschachtelte Innenkapillare umfasst, wobei mindestens das Antiresonanzelement-Außenrohr einen ovalen Querschnitt aufweist.

Zu diesem Zweck werden Antiresonanzelement-Vorformlinge bereitgestellt, die einen Fügeverbund aus einem Antiresonanzelement-Außenrohr und mindestens einer verschachtelten Innenkapillare aufweisen, wobei das Antiresonanzelement-Außenrohr einen ovalen Querschnitt hat.

Die ovale Querschnittsform ist durch eine im Querschnitt längste Achse (A_{L}) und eine im Querschnitt kürzeste Achse (A_{K}) definiert. Das ovale Antiresonanzelement-Außenrohr kann an seiner Soll-Position an der Hüllrohr-Innenwandung derart orientiert sein, dass sich die kurze Achse A_{K} in diejenige Raumrichtung erstreckt, die in Bezug auf Platzbedarf oder Einhaltung eines Mindestabstands zum benachbarten Strukturelement am kritischsten ist. Diese Verfahrensweise ermöglicht eine präzisere Fertigung der Hohlkernfaser.

Maßnahmen zur Herstellung der Vorform sind weiter oben im Zusammenhang der Herstellung der Hohlkernfaser erläutert und diese Erläuterungen werden hiermit einbezogen.

Hinsichtlich des Zwischenprodukts für die Antiresonante Hohlkernfaser wird die oben angegebene technische Aufgabe ausgehend von einem Zwischenprodukt der eingangs genannten Gattung erfindungsgemäß dadurch gelöst, dass mindestens das Antiresonanzelement-Außenrohr einen ovalen Querschnitt aufweist.

Das Zwischenprodukt liegt als massiver Körper oder als Ensemble von rohrförmigen Bauteilen vor, wobei die Bauteile ein Hüllrohr und eine Anzahl von Antiresonanzelement-Vorformlingen umfassen. Dadurch, dass mindestens ein Teil der Antiresonanzelement-Vorformlinge ein Antiresonanzelement-Außenrohr mit ovaler Querschnittsform hat, können die Bauteil des Zwischenprodukts leichter zusammengesetzt und montiert werden. Vorzugsweise haben alle Antiresonanzelement-Vorformlinge des Zwischenprodukts ein Antiresonanzelement-Außenrohr mit ovaler Querschnittsform. Dadurch wird die Montage an den Soll-Positionen innerhalb der Hüllrohr-Bohrung vereinfacht und eine präzisere Fertigung der Hohlkernfaser ermöglicht.

Dies gilt insbesondere für eine besonders geeignete Ausführungsform des Zwischenprodukts, bei der der ovale Querschnitt des mindestens einen Antiresonanzelement-Außenrohres eine längste Querschnittsachse A_{L} aufweist, und der Antiresonanzelement-Vorformling an der Soll-Position so montiert ist, dass die längste Querschnittsachse A_{L} von der Hüllrohr-Längsachse aus gesehen in radialer Richtung verläuft.

Bei dieser Orientierung verläuft die kurze Achse A_{K} der ovalen Querschnittsfläche in peripherer Richtung um die Innenmantelfläche des Hüllrohres und damit in einer Raumrichtung, die in Bezug auf Platzbedarf oder Einhaltung eines Mindestabstands zum benachbarten Strukturelement am kritischsten ist.

Das Zwischenprodukt und Maßnahmen zur Herstellung des Zwischenprodukts sind weiter oben im Zusammenhang der Herstellung der Hohlkernfaser erläutert und diese Erläuterungen werden hiermit einbezogen.

### Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der Beschreibung Gesagte maßgeblich.

### Antiresonanzelemente

Die Antiresonanzelemente können einfache oder verschachtelte Strukturelemente der Hohlkernfaser sein. Sie haben mindestens zwei Wandungen, die aus Richtung des Hohlkerns gesehen eine negative Krümmung haben (konvex) oder keine Krümmung haben (plan, gerade). Sie bestehen in der Regel aus einem Material, das für das Arbeitslicht transparent ist, beispielsweise aus Glas, insbesondere aus dotiertem oder nicht dotiertem SiO₂, einem Kunststoff, insbesondere aus einem Polymer, aus einem Verbundwerkstoff oder aus kristallinem Material.

### Antiresonanzelement-Vorformling / Antiresonanzelement-Vorstufe

Als Antiresonanzelement-Vorformlinge werden Bauteile oder Bestandteile der Vorform bezeichnet, die im Wesentlichen durch einfaches Langziehen beim Faserziehprozess zu Antiresonanzelementen in der Hohlkernfaser werden. Als Antiresonanzelement-Vorstufen werden Bauteile oder Bestandteile der Vorform bezeichnet, die erst durch Umformung zu Antiresonanzelement-Vorformlingen oder direkt zu Antiresonanzelementen werden. Die Antiresonanzelement-Vorformlinge können einfache oder verschachtelte Bauteile sein, an denen zusätzlich Positionierhilfen fixiert sein können. Sie liegen ursprünglich in der primären Vorform (Cane) vor.

Verschachtelte Antiresonanzelement-Vorformlinge bilden in der Hohlkernfaser verschachtelte Antiresonanzelemente. Sie setzen sich zusammen aus einem Außenrohr und mindestens einem weiteren Strukturelement, das in der Innenbohrung des Außenrohres angeordnet ist. Bei dem weiteren Strukturelement kann es sich um ein weiteres Rohr handeln, das an der Innenmantelfläche des Außenrohres anliegt. Im Folgenden wird das Außenrohr als "Antiresonanzelement-Außenrohr" bezeichnet und das weitere Rohr als "verschachtelte Innenkapillare". In der Innenbohrung der verschachtelten Innenkapillare kann bei mehrfach verschachtelten Antiresonanzelement-Vorformlingen mindestens ein weiteres Strukturelement angeordnet sein, beispielsweise ein an der Innenmantelfläche der verschachtelten Innenkapillare anliegendes, drittes Rohr. Um bei mehrfach verschachtelten Antiresonanzelement-Vorformlingen zwischen den mehreren Rohren zu unterscheiden, die innerhalb des Antiresonanzelement-Außenrohres angeordnet sind, wird hier das innerste Rohr auch als "innere verschachtelte Innenkapillare" und das äußere Rohr auch als "äußere verschachtelte Innenkapillare" bezeichnet.

Der Begriff "Querschnitt" in Verbindung mit zylinderförmigen Antiresonanzelement-Vorformlingen und deren zylinderförmigen Strukturelementen bezeichnet stets den Querschnitt senkrecht zur jeweiligen Zylinderlängsachse, und zwar - sofern nichts anderes angegeben - bei rohrförmigen Bauteilen den Querschnitt der Außenkontur (nicht: den Querschnitt der Innenkontur).

Durch Weiterverarbeitung der primären Vorform, insbesondere durch Heißumformschritte, können Zwischenprodukte entstehen, in denen die ursprünglichen Antiresonanzelement-Vorformlinge in einer gegenüber der ursprünglichen Form veränderten Form vorliegen. Die veränderte Form wird hier ebenfalls als Antiresonanzelement-Vorformling oder auch als Antiresonanzelement-Vorstufe bezeichnet.

### Vorform / primäre Vorform / sekundäre Vorform

Die Vorform ist dasjenige Bauteil, aus dem die Antiresonante Hohlkernfaser gezogen wird. Es ist eine primäre Vorform oder eine durch Weiterverarbeitung der primären Vorform erzeugte sekundäre Vorform. Die Weiterverarbeitung der primären Vorform zu einer sekundären Vorform, aus der die Hohlkernfaser gezogen wird, kann eine einmalige oder wiederholte Durchführung von einem oder mehreren der folgenden Heißformprozesse umfassen:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren.

### Elongieren / Kollabieren

Beim Elongieren wird die primäre Vorform gelängt. Die Längung kann ohne gleichzeitiges Kollabieren erfolgen. Das Elongieren kann maßstäblich erfolgen, so dass sich beispielsweise die Form und Anordnung von Bauteilen oder Bestandteilen der primären Vorform im elongierten Endprodukt widerspiegeln. Beim Elongieren kann die primäre Vorform aber auch nicht-maßstäblich gezogen und ihre Geometrie verändert werden.

Beim Kollabieren wird eine Innenbohrung verengt oder Ringspalte zwischen rohrförmigen Bauteil werden geschlossen oder verengt. Das Kollabieren geht in der Regel mit einem Elongieren einher.

### Hohlkern / Innerer Mantelbereich / Äußerer Mantelbereich / Cane

Das Ensemble aus mindestens einem Hüllrohr und darin lose aufgenommenen oder fest fixierten Vorformlingen oder Vorstufen für Antiresonanzelemente wird hier auch als "primäre Vorform", "Zwischenprodukt", oder "Cane" bezeichnet. Die primäre Vorform umfasst den Hohlkern und einen Mantelbereich. Dieser Mantelbereich wird auch als "innerer Mantelbereich" bezeichnet, wenn es auch einen "äußeren Mantelbereich" gibt, der beispielsweise durch Aufkollabieren auf den Cane erzeugt worden ist, und wenn zwischen diesen Mantelbereichen unterschieden werden soll. Die Bezeichnungen "innerer Mantelbereich" und "äußerer Mantelbereich" werden auch für die entsprechenden Bereiche in der Hohlkernfaser oder in Halbzeugen genutzt, die durch Weiterverarbeitung der primären Vorform erhalten werden.

Die Bezeichnung "Rohrinnenseite" wird auch als Synonym für "Rohr-Innenmantelfläche" und die Bezeichnung "Rohraußenseite" wird auch als Synonym für "Rohr-Außenmantelfäche" verwendet. Der Begriff "Innenbohrung" in Verbindung mit einem Rohr besagt nicht, dass die Innenbohrung durch einen Bohrvorgang erzeugt worden ist.

### Spanende Bearbeitung

Darunter werden trennende mechanische Fertigungsverfahren zur trennenden Bearbeitung eines Werkstücks verstanden, insbesondere Drehen, Schneiden, Bohren, Sägen, Fräsen und Schleifen. Durch diese Bearbeitung wird eine sich in Richtung der Hüllrohr-Längsachse erstreckende Längsstruktur geschaffen, die als Positionierungshilfe für die Antiresonanzelement-Vorformlinge dient. Die Längsstruktur ist von der Hüllrohr-Innenmantelfläche zugänglich; sie kann sich auch bis zur Außenmantelfläche durch die gesamte Hüllrohr-Wandung erstrecken.

### Ausführungsbeispiel

Nachfolgend wird die Erfindung anhand eines Ausführungsbeispiels und einer Zeichnung näher erläutert. Im Einzelnen zeigt
- **Figur 1**: ein Foto eines Ensembles mehrerer untereinander verschachtelter Strukturelemente zur Herstellung eines Antiresonanzelement-Vorformlings in einer Ansicht auf den Querschnitt,
- **Figur 2**: eine Skizze des Ensembles mit mehreren untereinander verschachtelten Strukturelementen in idealisierter Form,
- **Figur 3**: eine Skizze zur Erläuterung eines Verfahrensschritts zur Herstellung eines Antiresonanzelement-Vorformlings unter Einsatz des Ensembles von Figur 1,
- **Figur 4**: ein Foto eines Antiresonanzelement-Vorformlings mit ovalem Antiresonanzelement-Außenrohr, erhalten durch Weiterverarbeitung des Ensembles von Figur 1 im Querschnitt,
- **Figur 5**: eine schematische Darstellung eines unter Einsatz mehrerer Antiresonanzelement-Vorformlinge mit ovalem Hüllrohr gefertigten Zwischenprodukts im Querschnitt, und
- **Figur 6**: eine Skizze zur Erläuterung von Kraftverhältnissen beim Heißverformen verschachtelter Antiresonanzelemente.

Bei der Herstellung der Hohlkernfaser beziehungsweise der Vorform für die Hohlkernfaser sind eine Vielzahl von Bauteilen miteinander zu verbinden. Darüber hinaus kann es bei der Durchführung von Heißformprozessen hilfreich sein, vorhandene Spalte oder Kanäle der Vorform zu versiegeln. Zum Verbinden beziehungsweise zur Versiegelung wird eine auf SiO₂ basierende Versiegelungs- oder Verbindungsmasse eingesetzt, wie sie aus der DE 10 2004 054 392 A1 bekannt ist. Dabei wird durch Nassvermahlen von Quarzglaskörnung ein wässriger Schlicker erzeugt, der amorphe SiO₂-Partikel mit einer Partikelgrößenverteilung enthält, die durch einen D₅₀-Wert von etwa 5 µm und durch einen D₉₀-Wert von etwa 23 µm gekennzeichnet ist. Dem Basisschlicker wird weitere amorphe SiO₂-Körnung mit einer mittleren Korngröße von etwa 5 µm zugemischt. Der als Verbindungsmasse eingesetzte Schlicker hat einen Feststoffgehalt von 90%, der zu mindestens 99,9 Gew.-% aus SiO₂ besteht.

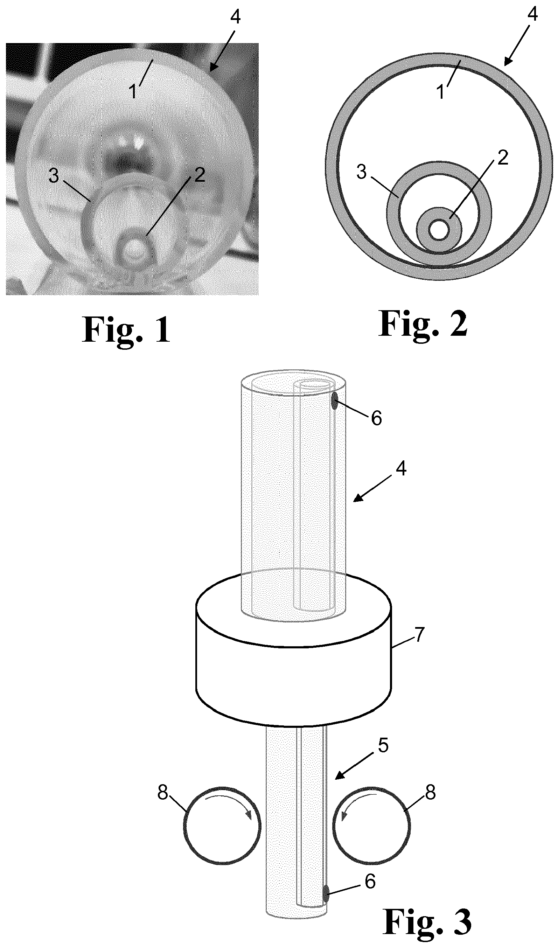

Die **Figuren 1 und 2** zeigen ein Vorprodukt 4 für die Herstellung eines Antiresonanzelement-Vorformlings mit ovalem Antiresonanzelement-Außenrohr. Das Vorprodukt liegt in Form eines Ensembles mehrerer miteinander verschachtelter Ausgangsrohre vor, nämlich einem Außenrohr 1, einem Mittelrohr 2 und einem Innenrohr 3. Alle Rohre (1; 2; 3) bestehen aus Quarzglas und haben einen kreisrunden, Querschnitt. Ihre Längsachsen verlaufen parallel und in der gegebenen Ansicht senkrecht zur Papierebene. Das Innenrohr 3 liegt mit seiner Außenmantelfläche an der Innenmantelfläche des Mittelrohres 2 an und dieses an der Innenmantelfläche des Außenrohres 1. Die Ausgangsrohre (1; 2; 3) unterscheiden sich in ihren Durchmessern, aber die Wanddicken und Längen sind im Wesentlichen gleich. Tabelle 1 enthält detaillierte Angaben zu den radialen Abmessungen der Ausgangsrohre (1; 2; 3).

**Figur 3** zeigt schematisch einen Verfahrensschritt zur Weiterverarbeitung des Vorprodukts 4 zu Antiresonanzelement-Vorformlingen 5. Die Ausgangsrohre (1; 2; 3) werden vorab im Bereich der Stirnseiten punktuell miteinander verschmolzen. Die lokalen Verbindungsstellen sind mit der Bezugsziffer 6 markiert. Der so fixierte Ausgangsrohr-Verbund 4 wird mit vertikal orientierten Längsachsen von oben nach unten einer Heizzone 7 zugeführt, darin zonenweise erweicht, und aus dem erweichten Bereich wird mittels Abzugsrollen 8 ein Strang (5) abgezogen, aus dem Antiresonanzelement-Vorformlinge 5 abgeschnitten werden. Die Innenbohrung der Ausgangsrohre (2; 3, 4) bleiben während dieses Prozesses offen, so dass sich darin etwa der gleiche Innendruck einstellt.

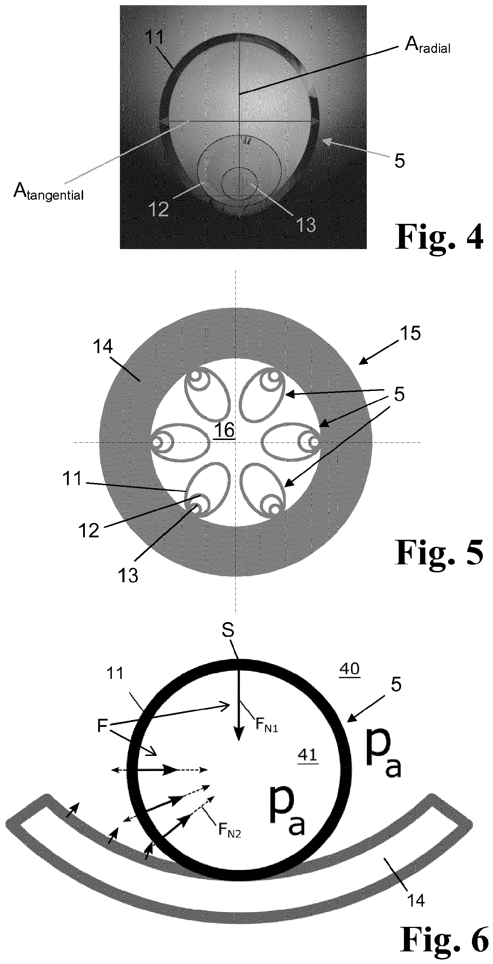

In den aufgrund des Erweichungs- und Streckungsprozesses erhaltenen Antiresonanzelement-Vorformlingen 5 sind die ehemaligen Ausgangsrohre (1; 2; 3) entlang ihrer Kontaktflächen miteinander verschmolzen und sie haben infolge der im erweichten Bereich wirksamen Oberflächenspannung ihre Querschnittsform in Richtung einer ovalen Form verändert. Das Foto von **Figur 4** zeigt einen Querschnitt des Antiresonanzelement-Vorformlings 5. Darin bildet das ehemalige Außenrohr (1) ein Antiresonanzelement-Außenrohr 11, das Mittelrohr (2) bildet eine äußere verschachtelte Innenkapillare 12 und das vormalige Innenrohr (13) bildet eine innere verschachtelte Innenkapillare 13. Alle Strukturelemente (11; 12; 13) zeigen eine ovale Außenquerschnittsfläche. Der Maßpfeil A_{radial} bezeichnet den Außendurchmesser des Antiresonanzelement-Außenrohres 11, gemessen an der Berührungsstelle mit äußeren verschachtelten Innenkapillare 12. Dies ist hier gleichzeitig der maximale Außendurchmesser des Antiresonanzelement-Außenrohres 11. Der Maßpfeil A_{tangential} bezeichnet die maximale Außenabmessung des Antiresonanzelement-Außenrohres 11, gemessen senkrecht zu A_{radial}. Diese Abmessung entspricht hier gleichzeitig dem minimalen Außendurchmesser des Antiresonanzelement-Außenrohres 11. Bei den verschachtelten Innenkapillaren 12; 13 werden A_{radial} und A_{tangential} analog ermittelt. Zwecks besserer Erkennbarkeit sind im Foto von Figur 4 die Außenkonturen der verschachtelten Innen-kapillaren 12; 13 mit einer punktierten Linie nachgezeichnet.

Daten zu den Ovalitäten der Strukturelemente (11; 12, 13) sind in Tabelle 1 genannt. In Spalte 6 ist der Ovalitätsgrad der jeweiligen Komponenten angegeben. In Spalte 5 sind die ovalen Querschnittsflächen jeweils charakterisiert durch die Länge der Achse (Abmessung) in radialer Richtung A_{radial} und die Länge der Achse (Abmessung) in der dazu senkrecht verlaufenden, tangentialen Richtung A_{tan-gential}. Beim Antiresonanzelement-Außenrohr 11 entspricht die Querschnittsachse A_{radial} der langen Querschnittsachse A_{L}. Bei den beiden verschachtelten Innenkapillaren 12; 13 entspricht die Querschnittsachse A_{tangential} der langen Querschnittsachse A_{L}. Somit ist bei beiden verschachtelten Innenkapillaren das Achsenlängenverhältnis A_{radial}/A_{tangential} kleiner als 1 (Spalte 6).

**Tabelle 1**

| **1** | **2** | **3** | **4** | **5** | **6** | **7** |
|---|---|---|---|---|---|---|
| **Ausgangsrohre 1, 2, 3 (Struktur-elemente 11, 12, 13)** | **Abmessung** | **Ensemble 4 vor Elongieren** | **Vorformling 5 nach Elongieren** | **A_{radial}/A_{tangential}** | **Ovalität (Verhältnis A_{radial}/A_{tangential})** | **Faser** |
| | | **[mm]** | **[mm]** | **[mm]** | | **[µm]** |
| **Außenrohr 1 (11**) | **OD** | 40,00 | 7,40^{*1)} | 7,43/ 6,34 | 1,17 | 25,00 |
| | **ID** | 36,50 | 6,70^{*1)} | | | 22,8 |
| | **t** | 1,76 | 0,33 | | | 1,10 |
| | **OD/ID** | 1,10 | 1,10 | | | 1,10 |
| | **Glas-Luft-Verhältnis** | 0,20 | | | | |
| | | | | | | |
| **Mittelrohr 2 (12)** | **OD** | 16,00 | 3,00^{*1)} | 3,25/ 2,87 | 0,88 | 10,0 |
| | **ID** | 12,50 | 2,30^{*1)} | | | 7,80 |
| | **t** | 1,76 | 0,33 | | | 1,10 |
| | **OD/ID** | 1,28 | 1,28 | | | 1,28 |
| | **Glas-Luft-Verhältnis** | 0,64 | | | | |
| | | | | | | |
| **Innenrohr 3 (13)** | **OD** | 8,00 | 1,50^{*1)} | 1,32/ 1,28 | 0,97 | 5,0 |
| | **ID** | 4,50 | 0,80^{*1)} | | | 2,8 |
| | **t** | 1,76 | 0,33 | | | 1,10 |
| | **OD/ID** | 1,79 | 1,79 | | | 1,79 |
| | **Glas-Luft-Verhältnis** | 2,19 | | | | |

| | | | | | | |
|---|---|---|---|---|---|---|
| Dabei bedeuten: OD Außendurchmesser ID Innendurchmesser t Wandstärke A_{radial} Länge der Querschnittsfläche in radialer Richtung (bezogen auf das Antiresonanzelement-Außenrohr) A_{tangential} Länge der Querschnittsfläche in tangentialer Richtung (bezogen auf die Kontaktstelle der Antiresonanzelemente im Antiresonanzelement-Außenrohr). ^{*1)} Hierbei handelt es sich nicht um Messdaten, sondern unter Annahme eines Verhältniszugs (maßstabsgetreue Durchmesserverringerung durch das Elongieren) errechnete Durchmesser-Sollwerte. | | | | | | |

Das Antiresonanzelement-Außenrohr 11 zeigt einen im Vergleich zu den beiden verschachtelten Innenkapillaren (12; 13) hohen Grad an Ovalität. Dies wird auf Unterschiede im Glas-Luft-Verhältnis zurückgeführt (Verhältnis der Querschnittsflächen der jeweiligen Rohrwandung und der Innenbohrung). Dieses beträgt beim Außenrohr 1 etwa 0,2 und ist damit gegenüber der Wertes beim Mittelrohr 2 (0,64) um den Faktor 3,2 niedriger und gegenüber dem Innenrohr 3 (2,19) um etwa den Faktor 11 niedriger. Dies führt beim Außenrohr 1 zu einem geringeren Flächenwiderstand gegenüber den beim Erweichungs- und Streckungsprozess wirkenden Kräften, die zu einer ovalen Verformung des jeweiligen Rohres führen.

Eine vergleichsweise stärkere Verformung des Außenrohres 1 beim Erweichungs- und Streckungsprozess kann auch erreicht werden, wenn das Quarzglas des Außenrohres 1 einen Dotierstoff enthält, der die Viskosität gegenüber dem undotierten Quarzglas von Mittelrohr 2 und Innenrohr 3 absenkt. Im Ausführungsbeispiel besteht das Außenrohr 1 aus einem handelsüblichen Quarzglas, das Fluor in einer Konzentration von 4800 Gew.-ppm enthält.

**Figur 5** zeigt schematisch einen Querschnitt einer unter Einsatz von Antiresonanzelement-Vorformlingen 5 aufgebauten primären Vorform 15. Diese stellt ein Zwischenprodukt zur Herstellung der Hohlkernfaser dar. Die primäre Vorform 15 setzt sich zusammen aus einem Hüllrohr 14 aus Quarzglas mit einer Länge von 1000 mm, einem Außendurchmesser von 30 mm und einem Innendurchmesser von24 mm. Alle Antiresonanzelement-Vorformlinge 5 liegen jeweils als gefügtes Ensemble miteinander verschachtelter Strukturelemente aus einem Außenrohr 11, einer äußeren verschachtelten Innenkapillare 12 und einer inneren verschachtelten Innenkapillare 13 vor. Das Außenrohr 11 hat einen Außendurchmesser im Bereich von 6,8 bis 8 mm und die äußere verschachtelte Innenkapillare 12 hat einen Außendurchmesser im Bereich von 3,1 bis 3,5 mm und die innere verschachtelte Innenkapillare 13 hat einen Außendurchmesser im Bereich von 1,38 bis 1,42 mm. Die Wandstärke aller Strukturelemente (11; 12; 13) ist gleich und beträgt 0,33 mm. Die Längen von Außenrohr 11 und verschachtelten Innenkapillaren (12; 13) entsprechen der Länge des Hüllrohres 14.

Das Hüllrohr 14 wird in einem Vertikalziehverfahren ohne Formwerkzeug mit zweistufigem Elongierprozess hergestellt. In der ersten Stufe wird ein Ausgangshohlzylinders aus Glas zur Einstellung von Ausgangshohlzylinder-Endmaßen mechanisch bearbeitet. Laut Endmaß beträgt der Außendurchmesser 90 mm und das Durchmesserverhältnis von Außen- und Innendurchmesser beträgt 2,5. Der Ausgangszylinder wird in einem ersten Elongierprozess mit vertikal orientierter Längsachse kontinuierlich einer Heizzone mit einer Heizzonenlänge von 200 mm zugeführt, darin bereichsweise erweicht und aus dem erweichten Bereich wird ein Zwischenzylinder abgezogen. Dieser wird in einem zweiten Elongierprozess mit vertikal orientierter Längsachse kontinuierlich einer anderen Heizzone mit einer Heizzonenlänge von 100 mm zugeführt, darin bereichsweise erweicht und aus dem erweichten Bereich ein Rohrstrang abgezogen. Aus dem Rohrstrang wird das Hüllrohr durch Ablängen erhalten.

Die Fixierung der Antiresonanzelement-Vorformlinge 5 an der Innenwand des Hüllrohrs 14 erfolgt mittels der auf SiO₂ basierenden Verbindungsmasse. Dazu wird die Verbindungsmasse auf der Hüllrohr-Innenmantelfläche lokal im Bereich der stirnseitigen Enden aufgetragen und die Antiresonanzelement-Vorformlinge werden darauf unter Einsatz einer Positionierungs-Schablone mit konstruktiv vorgegebener sternförmiger Anordnung von Haltearmen für die einzelnen Antiresonanzelement-Vorformlinge 5 aufgesetzt. Die Positionierungs-Schablone ist dabei auf den Bereich um die beiden stirnseitigen Hüllrohr-Enden beschränkt.

Die so erzeugte primäre Vorform 15 wird mit einem Überfangzylinder aus Quarzglas überfangen, wobei der Überfangzylinder auf das Hüllrohr 14 aufkollabiert, und gleichzeitig wird das Rohr-Ensemble zu einer sekundären Vorform elongiert. Der Überfangzylinder hat einen Außendurchmesser von 63,4 mm und eine Wandstärke von 17 mm.

Beim Kollabier- und Elongierprozess wird die koaxiale Anordnung von Hüllrohr 1 und Überfangzylinder bei vertikal orientierter Längsachse von unten kommend einer temperaturgeregelten Heizzone zugeführt und darin mit dem oberen Ende der Anordnung beginnend zonenweise erweicht.

Die Heizzone wird auf eine Soll-Temperatur von 1600 °C mit einer Regelgenauigkeit von +/- 0.1°C gehalten. Dadurch können Temperaturschwankungen im Heißformprozess auf weniger als +/- 0.5°C begrenzt werden.

Beim Kollabier- und Elongierschritt wird im hohlen Kernbereich 16 und in den rohrförmigen Antiresonanzelement-Vorformlingen 5 derselbe Innendruck erzeugt und aufrechterhalten. Dadurch verformen sich die vormaligen Antiresonanzelement-Vorformlinge der primären Vorform 15 und es wird ihnen eine im Wesentlichen runde Außenquerschnittsform aufgeprägt. **Figur 6** skizziert die dabei auftretenden Kräfteverhältnisse. Sowohl im hohlen Kernbereich 40 als auch in der Innenbohrung des Antiresonanzelement-Außenrohres 11 herrscht beim Elongieren Umgebungsdruck pₐ. Durch einen Überdruck in der Innenbohrung des Antiresonanzelement-Außenrohres 11 (gegenüber dem außerhalb anliegenden Druck) könnte die Form des Antiresonanzelement-Außenrohres 11 während des Elongierens stabilisiert werden. Ohne diesen Innendruck wirken Kräfte wie durch die Richtungspfeile F angedeutet. Das Verhältnis der Normalkraft F_{N1} im oberen Scheitelpunkt "S" zur resultierenden Normalkraft F_{N2} an den Seiten der Rohrwandung liegt oberhalb von 1. Infolge dieses Kraftverhältnisses verringert sich die anfängliche Ovalität des Antiresonanzelement-Außenrohr 11 beim Elongieren, so dass es je nach Vorhaltmaß näherungsweise einen runden Außenquerschnitt einnimmt.

Die im Kollabier- und Elongierprozess auf diese Weise gebildete sekundäre Vorform hat einen Außendurchmesser von etwa 50 mm und eine aus äußerem Mantel und innerem Mantel zusammengesetzte Mantel-Wanddicke von 16,6 mm. Die sekundäre Vorform wird zu einer Antiresonanten Hohlkernfaser elongiert. Dazu werden alle Strukturelemente der ehemaligen Antiresonanzelement-Vorformlinge 5 mit der oben erwähnten Versiegelungs- oder Verbindungsmasse verschlossen. Die Verschlussmasse ist dabei nur auf diejenige Stirnseite der Antiresonanzelement-Vorformlinge aufgebracht, die beim Faserziehprozess nach oben weist.

Dieselbe Stirnseite wird anschließend mit einem Halterohr aus Quarzglas verbunden, der gleichzeitig als Gasanschluss dient. Der Halter wird mittels der Versiegelungs- oder Verbindungsmasse am Überfangzylinder und am Hüllrohr fixiert. Beim Faserziehprozess wird die sekundäre Vorform bei vertikal orientierter Längsachse von oben kommend einer temperaturgeregelten Heizzone zugeführt und darin mit dem unteren Ende beginnend zonenweise erweicht. Die Heizzone wird auf eine Soll-Temperatur von etwa 2100 °C mit einer Regelgenauigkeit von +/- 0.1°C gehalten. Dadurch können Temperaturschwankungen im Heißformprozess auf weniger als +/- 0.5°C begrenzt werden. Gleichzeitig wird dem Kernbereich (Hohlkern) Gas zugeführt, so dass sich im Kernbereich ein Innendruck von 4 mbar einstellt.

Durch den so geführten Faserziehprozess wird eine Antiresonante Hohlkernfaser mit darin eingebetteten Antiresonanzelementen erhalten, die eine runde Querschnittsform haben. Das in der primären Vorform (Zwischenprodukt) eingestellte Vorhaltemaß an Ovalität der Strukturelemente der Antiresonanzelement-Vorformlinge war also so ausgelegt, dass in der endgültigen Antiresonanten Hohlkernfaser daraus Antiresonanzelemente mit kreisrundem Querschnitt entstehen.

## Patentansprüche

1. Verfahren zur Herstellung einer Antiresonanten Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bereitstellen von rohrförmigen Antiresonanzelement-Vorformlingen,
(c) Montieren der Antiresonanzelement-Vorformlinge an Soll-Positionen der Innenseite der Hüllrohr-Wandung unter Bildung einer primären Vorform, die einen hohlen Kernbereich und einen Mantelbereich aufweist,
(d) Elongieren der primären Vorform zu der Hohlkernfaser oder Weiterverarbeitung der primären Vorform zu einer sekundären Vorform, aus der die Hohlkernfaser gezogen wird, wobei die Weiterverarbeitung eine einmalige oder wiederholte Durchführung von einem oder mehreren der folgenden Heißformprozesse umfasst:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren,
**dadurch gekennzeichnet, dass** mindestens ein Teil der gemäß Verfahrensschritt (b) bereitgestellten Antiresonanzelement-Vorformlinge einen Fügeverbund aus mehreren, miteinander verschachtelten Strukturelementen bildet, der mindestens ein Antiresonanzelement-Außenrohr und mindestens eine mit der Innenmantelfläche des Antiresonanzelement-Außenrohres verbundene verschachtelte Innenkapillare umfasst, wobei mindestens das Antiresonanzelement-Außenrohr einen ovalen Querschnitt aufweist.

2. Verfahren nach einem der vorhergehenden Ansprüche, **dadurch gekennzeichnet, dass** der Fügeverbund mittels eines Fügeverfahrens erzeugt wird, das einen Verfahrensschritt umfasst, bei dem ein Ensemble aus dem Antiresonanzelement-Außenrohr und der mindestens einen verschachtelten Innenkapillare zonenweise erweicht und dabei gestreckt wird, wobei die verschachtelte Innenkapillare an der Innenmantelfläche des Antiresonanzelement-Außenrohres anliegt und sich parallel zu dessen Längsachse erstreckt.

3. Verfahren nach Anspruch 2, **dadurch gekennzeichnet, dass** der ovale Querschnitt des Antiresonanzelement-Außenrohres eine längste Querschnittsachse A_{L} und eine kürzeste Querschnittsachse A_{K} aufweist, wobei das Achsenlängenverhältnis A_{L}/A_{K} im Bereich zwischen 1,01 und 1,27 liegt.

4. Verfahren nach Anspruch 2 oder 3, **dadurch gekennzeichnet, dass** das Ensemble zwei sich gegenüberliegende stirnseitige Enden aufweist, an denen das Antiresonanzelement-Außenrohr und die verschachtelte Innenkapillare vor dem zonenweisen Erweichen und Strecken miteinander verbunden sind.

5. Verfahren nach einem der vorhergehenden Ansprüche, **dadurch gekennzeichnet, dass** der Fügeverbund das Antiresonanzelement-Außenrohr mit ovalem Querschnitt und eine äußere verschachtelte Innenkapillare und mindestens eine innere verschachtelte Innenkapillare aufweist, wobei die innere verschachtelte Innenkapillare an einer Innenmantelfläche der äußeren verschachtelten Innenkapillare anliegt und sich parallel zu deren Längsachse erstreckt.

6. Verfahren nach einem der vorhergehenden Ansprüche, **dadurch gekennzeichnet, dass** das Antiresonanzelement-Außenrohr ein Glas-Luft-Verhältnis V_{Rohr} und die mindestens eine verschachtelte Innenkapillare ein Glas-Luft-Verhältnis V_{Kapillare} aufweist, wobei gilt: V_{Kapillare} > 2xV_{Rohr}, vorzugsweise V_{Kapillare} > 2,5xV_{Rohr}.

7. Verfahren nach einem der vorhergehenden Ansprüche, **dadurch gekennzeichnet, dass** der ovale Querschnitt des Antiresonanzelement-Außenrohres eine längste Querschnittsachse A_{L} aufweist, und dass der Antiresonanzelement-Vorformling an der Soll-Position gemäß Verfahrensschritt (c) so montiert wird, dass die längste Querschnittsachse A_{L} von der Hüllrohr-Längsachse aus gesehen in radialer Richtung verläuft.

8. Verfahren nach einem der vorhergehenden Ansprüche, **dadurch gekennzeichnet, dass** beim Elongieren zu einer Hohlkernfaser gemäß Verfahrensschritt (d) in dem elongierten Antiresonanzelement-Außenrohr ein Überdruck gegenüber dem elongierten hohlen Kernbereich erzeugt und aufrechterhalten wird, so dass eine Hohlkernfaser mit dem hohlen Kernbereich und dem inneren Mantelbereich erzeugt wird, in dem das vormalige Antiresonanzelement-Außenrohr ein Antiresonanzelement mit kreisrundem oder mit ovalem Querschnitt bildet,

9. Verfahren nach einem der vorhergehenden Ansprüche, **dadurch gekennzeichnet, dass** bei der Weiterverarbeitung der primären Vorform zu einer sekundären Vorform gemäß Verfahrensschritt (d) in dem elongierten Antiresonanzelement-Außenrohr der gleiche Druck wie in dem elongierten hohlen Kernbereich erzeugt und aufrechterhalten wird, so dass eine sekundäre Vorform erzeugt wird, in der das vormalige Antiresonanzelement-Außenrohr eine Antiresonanzelement-Vorstufe mit ovalem Querschnitt bildet.

10. Verfahren nach einem der vorhergehenden Ansprüche, **dadurch gekennzeichnet, dass** die primäre Vorform einen Außendurchmesser im Bereich von 20 bis 70 mm aufweist.

11. Verfahren nach einem der vorhergehenden Ansprüche, **dadurch gekennzeichnet, dass** das Antiresonanzelement-Außenrohres aus Quarzglas besteht, das mindestens einen Dotierstoff enthält, der die Viskosität von Quarzglas absenkt und/oder dass die mindestens eine verschachtelte Innenkapillare aus Quarzglas besteht, das mindestens einen Dotierstoff enthält, der die Viskosität von Quarzglas erhöht.

12. Verfahren nach Anspruch 11, **dadurch gekennzeichnet, dass** das Quarzglas des Antiresonanzelement-Außenrohres bei einer Messtemperatur von 1250 °C eine um mindestens 0,1 dPa·s niedrigere Viskosität, vorzugsweise eine um mindestens 0,2 dPa·s, niedrigere Viskosität, aufweist als das Quarzglas der verschachtelten Innenkapillare (bei Angabe der Viskosität als logarithmischer Wert in dPa·s).

13. Verfahren zur Herstellung einer Vorform für eine Antiresonante Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bereitstellen von rohrförmigen Antiresonanzelement-Vorformlingen,
(c) Montieren der Antiresonanzelement-Vorformlinge an Soll-Positionen der Innenseite der Hüllrohr-Wandung unter Bildung einer primären Vorform, die einen hohlen Kernbereich und einen Mantelbereich aufweist, und
(d) optionale Weiterverarbeitung der primären Vorform zu einer sekundären Vorform für die Hohlkernfaser, wobei die Weiterverarbeitung eine einmalige oder wiederholte Durchführung von einem oder mehreren der folgenden Heißformprozesse umfasst:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren,
**dadurch gekennzeichnet, dass** mindestens ein Teil der gemäß Verfahrensschritt (b) bereitgestellten Antiresonanzelement-Vorformlinge einen Fügeverbund aus mehreren, miteinander verschachtelten Strukturelementen bildet, der mindestens ein Antiresonanzelement-Außenrohr und mindestens eine mit der Innenmantelfläche des Antiresonanzelement-Außenrohres verbundene verschachtelte Innenkapillare umfasst, wobei mindestens das Antiresonanzelement-Außenrohr einen ovalen Querschnitt aufweist.

14. Zwischenprodukt für eine Antiresonante Hohlkernfaser, aufweisend ein Hüllrohr, das eine Hüllrohr-Innenbohrung und eine Hüllrohr-Längsachse aufweist, entlang der sich eine von einer Innenseite und einer Außenseite begrenzte Hüllrohr-Wandung erstreckt, und einer Anzahl von rohrförmigen Antiresonanzelement-Vorformlingen, die an Soll-Positionen der Innenseite der Hüllrohr-Wandung montiert sind, und von denen mindestens ein Teil einen Fügeverbund aus mehreren, miteinander verschachtelten Strukturelementen bildet, der mindestens ein Antiresonanzelement-Außenrohr und mindestens eine mit der Innenmantelfläche des Antiresonanzelement-Außenrohres verbundene verschachtelte Innenkapillare umfasst, **dadurch gekennzeichnet, dass** mindestens das Antiresonanzelement-Außenrohr einen ovalen Querschnitt aufweist.

15. Zwischenprodukt nach Anspruch 14, **dadurch gekennzeichnet, dass** der ovale Querschnitt des Antiresonanzelement-Außenrohres eine längste Querschnittsachse A_{L} aufweist, und dass der Antiresonanzelement-Vorformling an der Soll-Position so montiert ist, dass die längste Querschnittsachse A_{L} in radialer Richtung zur Hüllrohr-Längsachse verläuft.
